# FASCICULE DE BREVET EUROPEEN

(11) **EP 4 031 425 B1**
(45) Date de publication et mention de la délivrance du brevet: **27.12.2023**
(21) Numéro de dépôt: 20767810.3
(22) Date de dépôt: 08.09.2020
(51) Int. Cl.: B60W 10/18, B60W 30/17

(54) **PROCÉDÉ DE PILOTAGE D'UN VÉHICULE AUTOMOBILE**
VERFAHREN ZUM ANTRIEB EINES KRAFTFAHRZEUGES
METHOD FOR DRIVING A MOTOR VEHICLE

(30) Priorité: 18.09.2019 FR 1910295
(43) Date de publication de la demande: 27.07.2022
(73) Titulaire: Renault S.A.S., 92100 Boulogne-Billancourt (FR); NISSAN MOTOR Co., Ltd., Yokohama-shi, Kanagawa 221-0023 (JP)
(72) Inventeur: DEBORNE, Renaud, 78150 LE CHESNAY (FR); LEMINOUX, Gérald, 78980 Longnes (FR); MALLOL, Denis, 76100 ROUEN (FR)
(74) Mandataire: Renault Group
(86) Numéro de dépôt international: PCT/EP2020/075102
(87) Numéro de publication internationale: WO 2021/052821

(56) Documents cités:
- EP-A1- 1 356 978
- EP-A1- 2 412 595
- DE-A1- 19 838 885
- FR-A1- 2 912 981
- FR-A1- 2 975 958
- US-A1- 2017 259 795

## Description

### Domaine technique de l'invention

La présente invention concerne de manière générale les véhicules automobiles autonomes ou semi-autonomes (à conduite assistée).

Elle concerne plus particulièrement un procédé de commande d'un organe de pilotage d'un véhicule automobile, comportant :
- une étape d'acquisition d'une consigne de vitesse,
- une étape de mesure de la vitesse du véhicule automobile, et
- une étape de calcul d'une consigne de commande dudit organe de pilotage en fonction de la vitesse mesurée et de la consigne de vitesse.

L'invention trouve une application particulièrement avantageuse dans le domaine du freinage des véhicules à vitesse réduite.

Elle concerne également un véhicule automobile adapté à mettre en oeuvre le procédé précité.

### Etat de la technique

On cherche actuellement des solutions permettant d'accroître la sécurité des véhicules automobiles lorsqu'ils circulent sur route.

Ces solutions proposent soit d'aider les conducteurs à conduire leurs véhicules en toute sécurité, soit de conduire ces véhicules de façon autonome, sans l'aide de conducteur.

L'une des technologies employées à cette fin consiste en un régulateur de vitesse adaptatif, plus connu sous les initiales ACC (de l'anglais « adaptive cruise control »). Selon cette technologie, lorsque le conducteur a choisi une vitesse à laquelle il souhaiterait rouler, l'unité informatique embarquée dans le véhicule pilote ce dernier de façon à ce qu'il avance à cette vitesse tant qu'il n'y a aucun danger avéré et qu'il module cette vitesse lorsque la circulation est dense, de manière à maintenir une distance de sécurité suffisant avec le véhicule qui le précède.

Cette solution est par exemple décrite dans les documents US6878096 et US7117077.

Cette solution nécessite de connaître avec précision la vitesse instantanée du véhicule équipé de cette technologie.

Malheureusement, les capteurs embarqués dans les véhicules pour mesurer cette vitesse ne sont pas fiables lorsque la vitesse est très faible (inférieure par exemple à 1 km/h).

Il s'ensuit un risque consistant à considérer que le véhicule est à l'arrêt alors qu'il roule encore à vitesse réduite.

Dans le document US6878096, il est alors prévu d'extrapoler l'arrêt du véhicule en tenant compte de l'évolution de sa vitesse, puis d'activer le frein parking et de changer le rapport de transmission (en mode Neutre puis Parking) lorsqu'on considère que le véhicule est à l'arrêt.

Cette solution ne s'avère toutefois pas satisfaisante, notamment car elle risque d'activer le frein parking alors que le véhicule roule encore.

### Présentation de l'invention

Afin de remédier aux inconvénients précités de l'état de la technique, la présente invention propose de viser non pas une vitesse nulle pour la mise à l'arrêt du véhicule, mais une vitesse négative.

Plus particulièrement, on propose selon l'invention un procédé de commande tel que défini dans l'introduction, dans lequel, lorsque le véhicule automobile avance en marche avant et doit être stoppé, la consigne de vitesse est déterminée de façon à être inférieure strictement à zéro.

Ainsi, l'invention propose de résoudre le problème d'erreur de mesure à basse vitesse sans modifier la loi de commande du véhicule, mais plutôt en leurrant cette loi de commande.

Cette invention a alors pour avantage d'assurer une continuité de la commande de freinage du véhicule lorsque le véhicule doit être stoppé, de ne pas nécessiter de capteurs autres que ceux déjà prévus pour assurer la fonction de régulateur de vitesse adaptatif, et d'assurer, après l'arrêt complet du véhicule, un maintien à l'arrêt de ce dernier.

D'autres caractéristiques avantageuses et non limitatives du procédé de commande conforme à l'invention, prises individuellement ou selon toutes les combinaisons techniquement possibles, sont les suivantes :
- le véhicule automobile est considéré comme avançant en marche avant et devant être stoppé lorsque la consigne de vitesse passe d'une valeur strictement positive à zéro
- la consigne de commande est déterminée en fonction au moins de l'écart entre la consigne de vitesse et la vitesse mesurée ;
- la consigne de commande est déterminée en fonction également d'une donnée externe relative à l'environnement du véhicule automobile ;
- il est prévu une étape d'acquisition d'une vitesse souhaitée et dans lequel la consigne de vitesse est déterminée en fonction de la vitesse souhaitée ;
- la consigne de vitesse est déterminée en fonction d'une donnée externe relative à l'environnement du véhicule automobile ;
- un autre véhicule précédant ledit véhicule automobile, la donnée externe comprend la vitesse dudit autre véhicule et/ou la distance séparant les deux véhicules.

L'invention propose également un véhicule automobile équipé d'une unité de pilotage programmée pour mettre en oeuvre le procédé défini ci-dessus.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[fig.1] est une vue schématique de côté de deux véhicules automobiles roulant sur une route ;
[fig.2] est un graphique illustrant la variation dans le temps de la vitesse réelle de l'un des véhicules de la figure 1, de la consigne de vitesse et de la vitesse mesurée ;
[fig.3] est un graphique illustrant la variation d'une erreur de vitesse ; et
[fig.4] est un graphique illustrant la variation dans le temps d'une consigne de freinage du véhicule.

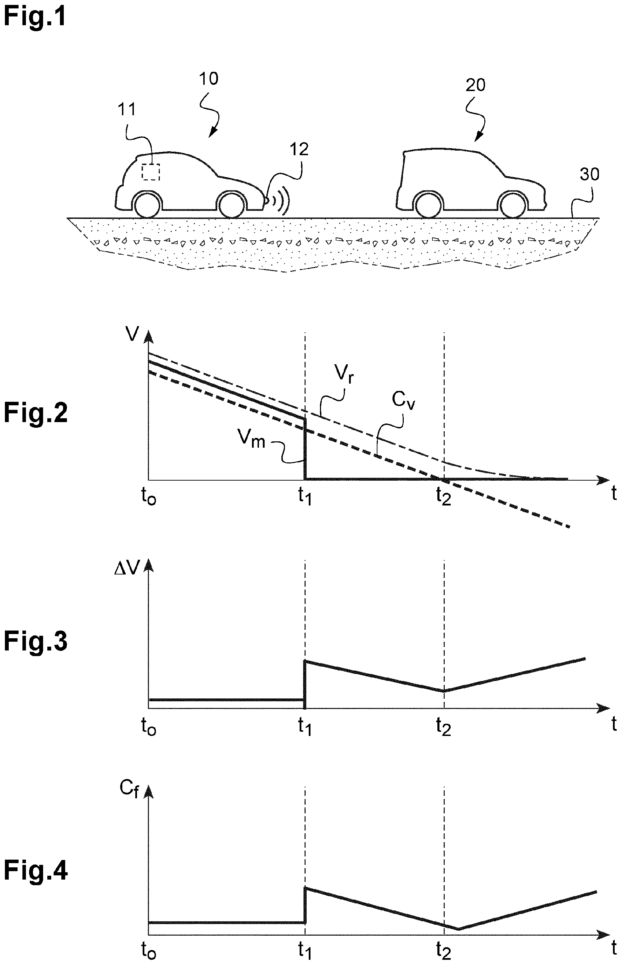

Sur la figure 1, on a représenté deux véhicules automobiles 10, 20 roulant sur une route 30.

Le véhicule automobile que l'on considérera plus particulièrement ici sera celui qui suit l'autre. Ce véhicule automobile sera ci-après appelé véhicule considéré 10. L'autre véhicule automobile sera appelé véhicule précédent 20.

Comme cela apparaît sur la figure 1, le véhicule considéré 10 est ici une voiture comportant un châssis qui est supporté par des roues et qui supporte lui-même différents équipements parmi lesquels un groupe motopropulseur, des moyens de freinage, et une unité de direction.

Il pourra s'agir d'un véhicule à pilotage manuel, auquel cas ce dernier sera équipé de moyens d'assistance à la conduite, ou, préférentiellement, d'un véhicule autonome.

Les moyens de freinage comportent ici quatre étriers de freins adaptés à pincer des disques de frein équipant les quatre roues du véhicule considéré 10. Ces moyens de freinage comportent en outre un organe de pilotage se présentant ici sous la forme d'un actionneur adapté à actionner les quatre étriers de freins lorsqu'il en reçoit la consigne afin de freiner le véhicule considéré 10.

Ce véhicule considéré 10 est équipé de capteurs lui permettant de se repérer dans son environnement de façon à pouvoir piloter au moins les moyens de freinage de façon autonome, c'est-à-dire sans intervention humaine.

Tout type de capteur pourrait être employé.

Dans l'exemple représenté sur la figure 1, le véhicule considéré 10 est équipé d'un télédétecteur RADAR 12 orienté vers l'avant du véhicule afin de déterminer la distance d₁₀₋₂₀ séparant les deux véhicules automobiles 10, 20. Ce télédétecteur RADAR 12 est en outre ici adapté à mesurer la vitesse V₂₀ du véhicule précédent 20.

Le véhicule considéré 10 pourrait être équipé en variante d'une caméra ou de tout autre capteur de télémétrie (LIDAR ou SONAR).

Le véhicule est par ailleurs équipé d'un capteur de vitesse adapté à mesurer la vitesse V_{M} avec laquelle il évolue sur la route 30. Ce capteur de vitesse est par exemple adapté à mesurer la vitesse de rotation des roues du véhicule à en déduire la valeur de la vitesse V_{M}.

Enfin, le véhicule considéré 10 est équipé d'un moyen de saisie d'une vitesse à laquelle le conducteur souhaite rouler (ci-après appelée vitesse souhaitée V_{S}).

Afin de traiter les informations fournies par le moyen de saisie, par le capteur de vitesse et par le télédétecteur RADAR 12 et afin d'être en mesure d'élaborer une consigne de freinage Cf du véhicule considéré 10, ce dernier est équipé d'une unité de pilotage ci-après appelée calculateur 11.

Ce calculateur 11 comporte un processeur, une mémoire et différentes interfaces d'entrée et de sortie.

Grâce à ses interfaces d'entrée, le calculateur 11 est adapté à recevoir des signaux d'entrée provenant du moyen de saisie, du capteur de vitesse et du télédétecteur RADAR 12.

La mémoire du calculateur 11 mémorise une application informatique, constituée de programmes d'ordinateur comprenant des instructions dont l'exécution par le processeur permet la mise en oeuvre par le calculateur du procédé décrit ci-après.

Parmi ces programmes d'ordinateur, l'un assure la fonction de régulateur de vitesse adaptatif.

Enfin, grâce à ses interfaces de sortie, le calculateur est adapté à transmettre des consignes aux différents organes du véhicule, et notamment aux moyens de freinage.

Le procédé selon l'invention est prévu pour générer une commande de l'actionneur des moyens de freinage qui permette d'assurer l'arrêt complet du véhicule considéré 10 lorsque cela s'avère nécessaire. Ce procédé comporte plusieurs étapes mises en oeuvre de façon récursive, c'est-à-dire en boucle, à pas de temps réguliers.

Il comporte tout d'abord une étape d'initialisation au cours de laquelle le calculateur 11 acquiert la vitesse mesurée V_{M} du véhicule considéré 10, la vitesse V₂₀ du véhicule précédent 20 et la distance d₁₀₋₂₀ séparant ces deux véhicules.

Lors de cette étape, le calculateur acquiert également la vitesse souhaitée V_{S}. Ici, cette vitesse est saisie par le conducteur du véhicule considéré 10. En variante, on pourrait prévoir qu'elle soit déterminée autrement (elle pourrait par exemple être choisie égale à la limite de vitesse légale sur la route empruntée).

Au cours d'une seconde étape, le calculateur 11 détermine si la fonction de régulateur de vitesse adaptatif est activée ou non.

Si ce n'est pas le cas, le procédé se réinitialise et revient donc à l'étape d'initialisation.

Si c'est le cas, le procédé se poursuit en une troisième étape au cours de laquelle le calculateur calcule une consigne de vitesse Cv pour le véhicule considéré 10.

Cette consigne de vitesse Cv est par exemple ici déterminée de la façon suivante.

Tant qu'aucun véhicule ne précède le véhicule considéré 10 ou tant que la distance d ₁₀₋₂₀ séparant le véhicule considéré 10 du véhicule précédent 20 est supérieure à une distance de sécurité déterminée (laquelle dépend par exemple des vitesses mesurées V_{M} , V₂₀), la consigne de vitesse Cv est choisie égale à la vitesse souhaitée V_{S}.

Lorsque la distance d₁₀₋₂₀ séparant le véhicule considéré 10 du véhicule précédent 20 est inférieure à la distance de sécurité déterminée, la consigne de vitesse Cv est réduite de façon à maintenir la distance d₁₀₋₂₀ égale à la distance de sécurité.

Puis, le procédé se poursuit en une quatrième étape au cours de laquelle le calculateur 11 détermine la consigne de commande de l'actionneur des moyens de freinage, ci-après appelée consigne de freinage Cf.

Pour cela, le calculateur 11 calcule l'écart ΔV, en valeur absolue, entre la consigne de vitesse Cv et la vitesse mesurée V_{M}, puis il en déduit la consigne de freinage Cf à l'aide d'une boucle de rétroaction fermée. La consigne de freinage Cf est donc ici déterminée de façon classique en fonction de la consigne de vitesse Cv et de la vitesse mesurée V_{M}. On peut ainsi par exemple utiliser un correcteur de type PID (proportionnel, intégral, dérivé).

Selon l'invention, lorsque la consigne de vitesse Cv passe d'une valeur positive à une valeur égale à zéro, ce qui peut être interprété comme une volonté de mise à l'arrêt du véhicule considéré 10, cette consigne de vitesse Cv est ensuite déterminée de façon à présenter une valeur négative.

De cette manière, l'écart ΔV redevient positif, ce qui permet au calculateur 11 de calculer une consigne de freinage Cf qui est non nulle.

On peut décrire plus en détail un exemple de mise en oeuvre de ce procédé en référence aux figures 2 à 4. Cet exemple correspond à l'éventualité dans laquelle le véhicule considéré 10 est contraint de freiner puisque le véhicule précédent 20 s'arrête.

Entre les instants t₀ et t₁, la vitesse réelle V_{R} du véhicule considéré 10 est suffisamment élevée pour que la mesure effectuée par le capteur de vitesse soit fiable.

On observe sur la figure 2 que la consigne de vitesse Cv décroît progressivement de façon à commander l'arrêt du véhicule considéré 10. On y observe aussi que la vitesse réelle V_{R} et la vitesse mesurée V_{M} décroissent aussi, de façon sensiblement identique.

On note seulement un retard entre la consigne de vitesse Cv et la vitesse mesurée V_{M} qui s'explique par le temps de réponse non nul de la chaine de freinage (transmission, temps de réponse des actionneurs...).

Entre les instants t₀ et t₁, l'écart ΔV entre la consigne de vitesse Cv et la vitesse mesurée V_{M}, représenté sur la figure 3, est donc non nul, de sorte que la consigne de freinage Cf (représentée sur la figure 4) est déterminée de façon à être aussi non nulle.

A l'instant t₁, la vitesse réelle V_{R} du véhicule considéré 10 devient trop faible pour que le capteur de vitesse soit capable de la mesurer avec précision. Aussi, comme le montre la figure 2, la vitesse mesurée V_{M} tombe subitement à zéro.

A cet instant, comme le montre la figure 3, l'écart ΔV entre la consigne de vitesse Cv et la vitesse mesurée V_{M}, représenté sur la figure 3, augmente brusquement. Alors, comme le montre la figure 4, la consigne de freinage Cf (représentée sur la figure 4) augmente elle aussi brusquement (en pratique, cette augmentation sera filtrée et adouci par le correcteur PID).

De ce fait, la vitesse réelle V_{R} du véhicule considéré continue de décroître.

Lorsque la consigne de vitesse Cv devient nulle (à l'instant t₂), l'écart ΔV entre la consigne de vitesse Cv et la vitesse mesurée V_{M} s'annule également. Alors, comme le montre la figure 4, la consigne de freinage Cf (représentée sur la figure 4) devient elle aussi égale à zéro.

Le risque est alors que le véhicule ne soit pas complètement arrêté, ce qui ne peut pas être détecté par le capteur de vitesse. Dans notre exemple, la figure 2 montre ainsi que la vitesse réelle V_{R} est à cet instant encore positive et non nulle.

Pour prévenir ce risque sans modifier la loi de commande précitée de la fonction de régulation de vitesse adaptative, la consigne de vitesse Cv est alors déterminée de façon à devenir strictement négative alors que le véhicule est soit à l'arrêt soit encore en train d'avancer en marche avant.

De ce fait, l'écart ΔV entre la consigne de vitesse Cv et la vitesse mesurée V_{M}, représenté sur la figure 3, ré-augmente. Alors, comme le montre la figure 4, la consigne de freinage Cf (représentée sur la figure 4) ré-augmente elle aussi progressivement, ce qui assure l'arrêt complet du véhicule et son maintien en position arrêtée, comme le montre la courbe de vitesse réelle V_{R} illustrée sur la figure 2.

On peut ensuite prévoir d'annuler la consigne de vitesse Cv après une durée prédéterminée.

Ainsi pourra-t-on envisager de déterminer que le véhicule automobile avance en marche avant et doit être stoppé d'une façon différente.

On pourrait ainsi prévoir de calculer un critère indiquant si le véhicule considéré doit ou non être stoppé en fonction de la vitesse mesurée V_{M}, de la vitesse V₂₀ du véhicule précédent 20 et de la distance d₁₀₋₂₀.

On pourrait ainsi prévoir que si ces trois données sont inférieures à trois seuils prédéterminés, le véhicule doit s'arrêter. Dès lors, on pourrait directement fixer la consigne de vitesse Cv à une valeur strictement négative.

## Revendications

1. Procédé de commande d'un organe de pilotage d'un véhicule automobile (10), comportant :
- une étape d'acquisition d'une consigne de vitesse (Cv),
- une étape de mesure de la vitesse (V_{M}) du véhicule automobile (10), et
- une étape de calcul d'une consigne de commande (Cf) dudit organe de pilotage en fonction de la vitesse (V_{M}) mesurée et de la consigne de vitesse (Cv),
**caractérisé en ce que**, lorsque le véhicule automobile (10) avance en marche avant et doit être stoppé, la consigne de vitesse (Cv) est déterminée de façon à être inférieure strictement à zéro.

2. Procédé de commande selon la revendication précédente, dans lequel le véhicule automobile (10) est considéré comme avançant en marche avant et devant être stoppé lorsque la consigne de vitesse (Cv) passe d'une valeur strictement positive à zéro.

3. Procédé de commande selon l'une des revendications précédentes, dans lequel la consigne de commande (Cf) est déterminée en fonction au moins de l'écart (ΔV) entre la consigne de vitesse (Cv) et la vitesse (V_{M}) mesurée.

4. Procédé de commande selon l'une des revendications précédentes, dans lequel la consigne de commande (Cf) est déterminée en fonction également d'une donnée externe relative à l'environnement du véhicule automobile (10).

5. Procédé de commande selon l'une des revendications précédentes, dans lequel il est prévu une étape d'acquisition d'une vitesse souhaitée (V_{S}) et dans lequel la consigne de vitesse (Cv) est déterminée en fonction de la vitesse souhaitée (V_{S}).

6. Procédé de commande selon l'une des revendications précédentes, dans lequel la consigne de vitesse (Cv) est déterminée en fonction d'une donnée externe relative à l'environnement du véhicule automobile (10).

7. Procédé de commande selon l'une au moins des revendications 4 et 6, dans lequel, un autre véhicule (20) précédant ledit véhicule automobile (10), la donnée externe comprend la vitesse (V₂₀) dudit autre véhicule (20) et/ou la distance (d₁₀₋₂₀) séparant les deux véhicules (10, 20).

8. Véhicule automobile (10) comportant une unité de pilotage (11) autonome ou assistée, **caractérisé en ce que** l'unité de pilotage (11) est programmée pour mettre en oeuvre un procédé de commande conforme à l'une des revendications précédentes.

## Patentansprüche

1. Verfahren zur Steuerung eines Steuerorgans eines Kraftfahrzeugs (10), umfassend:
- einen Schritt der Erfassung eines Geschwindigkeitssollwertes (C_{V}),
- einen Schritt der Messung der Geschwindigkeit (V_{M}) des Kraftfahrzeugs (10), und
- einen Schritt der Berechnung eines Steuersollwertes (Cf) des Steuerorgans in Abhängigkeit von der gemessenen Geschwindigkeit (V_{M}) und dem Geschwindigkeitssollwert C_{V}),
**dadurch gekennzeichnet, dass**, wenn sich das Kraftfahrzeug (10) in Vorwärtsfahrt bewegt und angehalten werden muss, der Geschwindigkeitssollwert (C_{V}) so bestimmt wird, dass er streng kleiner als null ist.

2. Verfahren zur Steuerung nach dem vorhergehenden Anspruch, wobei das Kraftfahrzeug (10) als sich in Vorwärtsfährt bewegend und angehalten werden müssend betrachtet wird, wenn der Geschwindigkeitssollwert (C_{V}) von einem streng positiven Wert zu null übergeht.

3. Verfahren zur Steuerung nach einem der vorhergehenden Ansprüche, wobei der Steuersollwert (Cf) in Abhängigkeit von wenigstens der Abweichung (ΔV) zwischen dem Geschwindigkeitssollwert (C_{V}) und der gemessenen Geschwindigkeit (V_{M}) bestimmt wird.

4. Verfahren zur Steuerung nach einem der vorhergehenden Ansprüche, wobei der Steuersollwert (Cf) auch in Abhängigkeit von einer externen Größe, die sich auf die Umgebung des Kraftfahrzeugs (10) bezieht, bestimmt wird.

5. Verfahren zur Steuerung nach einem der vorhergehenden Ansprüche, wobei ein Schritt der Erfassung einer gewünschten Geschwindigkeit (V_{S}) vorgesehen ist und wobei der Geschwindigkeitssollwert (C_{V}) in Abhängigkeit von der gewünschten Geschwindigkeit (V_{S}) bestimmt wird.

6. Verfahren zur Steuerung nach einem der vorhergehenden Ansprüche, wobei der Geschwindigkeitssollwert (C_{V}) in Abhängigkeit von einer externen Größe, die sich auf die Umgebung des Kraftfahrzeugs (10) bezieht, bestimmt wird.

7. Verfahren zur Steuerung nach wenigstens einem der Ansprüche 4 bis 6, wobei, wenn ein anderes Fahrzeug (20) dem Kraftfahrzeug (10) vorausfährt, die externe Größe die Geschwindigkeit (V₂₀) des anderen Fahrzeugs (20) und/oder den Abstand (d₁₀₋₂₀), der die zwei Fahrzeuge (10, 20) trennt, umfasst.

8. Kraftfahrzeug (10), welches eine autonome Steuereinheit oder Assistenzsteuereinheit (11) aufweist, **dadurch gekennzeichnet, dass** die Steuereinheit (11) dafür programmiert ist, ein Verfahren zur Steuerung gemäß einem der vorhergehenden Ansprüche durchzuführen.

## Claims

1. Method for controlling a drive member of a motor vehicle (10), comprising: - a step of acquisition of a speed setpoint (Cv), - a step of measurement of the speed (V_{M}) of the motor vehicle (10), and - a step of calculation of a control setpoint (Cf) for said drive member as a function of the measured speed (V_{M}) and of the speed setpoint (Cv), **characterized in that**, when the motor vehicle (10) is moving forward and has to be stopped, the speed setpoint (Cv) is determined so as to be strictly less than zero.

2. Control method according to the preceding claim, wherein the motor vehicle (10) is considered to be moving forward and having to be stopped when the speed setpoint (Cv) passes from a strictly positive value to zero.

3. Control method according to one of the preceding claims, wherein the control setpoint (Cf) is determined as a function at least of the deviation (ΔV) between the speed setpoint (Cv) and the measured speed (V_{M}).

4. Control method according to one of the preceding claims, wherein the control setpoint (Cf) is determined as a function also of an external datum relating to the environment of the motor vehicle (10).

5. Control method according to one of the preceding claims, wherein a step of acquisition of a desired speed (V_{S}) is provided and wherein the speed setpoint (Cv) is determined as a function of the desired speed (V_{S}).

6. Control method according to one of the preceding claims, wherein the speed setpoint (Cv) is determined as a function of an external datum relating to the environment of the motor vehicle (10).

7. Control method according to at least one of Claims 4 and 6, wherein, another vehicle (20) preceding said motor vehicle (10), the external datum comprises the speed (V₂₀) of said other vehicle (20) and/or the distance (d₁₀₋₂₀) separating the two vehicles (10, 20).

8. Motor vehicle (10) comprising an autonomous or assisted drive unit (11), **characterized in that** the drive unit (11) is programmed to implement a control method according to one of the preceding claims.
